# EUROPÄISCHE PATENTSCHRIFT

(11) **EP 2 981 422 B1**
(45) Veröffentlichungstag und Bekanntmachung des Hinweises auf die Patenterteilung: **30.10.2019**
(21) Anmeldenummer: 14704335.0
(22) Anmeldetag: 13.02.2014
(51) Int. Cl.: B60C 11/00, B60C 11/03, B29B 7/74

(54) **FAHRZEUGLUFTREIFEN**
PNEUMATIC VEHICLE TYRE
PNEUMATIQUE DE VÉHICULE

(30) Priorität: 04.04.2013 DE 102013103367
(43) Veröffentlichungstag der Anmeldung: 10.02.2016
(73) Patentinhaber: Continental Reifen Deutschland GmbH, 30165 Hannover (DE)
(72) Erfinder: VOLK, Heiner, 31535 Neustadt (DE); STRÜBEL, Christian, 30559 Hannover (DE); MÜLLER, Norbert, 29336 Nienhagen (DE)
(74) Vertreter: Finger, Karsten
(86) Internationale Anmeldenummer: PCT/EP2014/052769
(87) Internationale Veröffentlichungsnummer: WO 2014/161685

(56) Entgegenhaltungen:
- EP-A1- 0 798 142
- EP-A1- 1 609 624
- EP-A1- 2 594 413
- DE-A1-102008 018 340
- DE-A1-102008 018 345

## Beschreibung

Die Erfindung betrifft einen Fahrzeugluftreifen für Personenkraftwagen, Vans oder dergleichen mit einer Radialkarkasse, einem mehrlagigen Gürtel und einem profilierten Laufstreifen, welcher, in axialer Richtung betrachtet, einen zentralen Abschnitt und zwei Schulterabschnitte aufweist, wobei die Schulterabschnitte aus einer Gummimischung bestehen, die einen geringeren dynamischen Elastizitätsmodul E' (bei 55° C und 8 % Dehnung, gemäß DIN 53513) aufweist als die Gummimischung, aus welcher der zentrale Abschnitt besteht, und wobei der zentrale Abschnitt an seiner Basis seitlich im Wesentlichen parallel zum Laufstreifenunterbau und radial innerhalb sowie über die Breite der Schulterabschnitte verlaufende Ausläufer aufweist.

Ein derartiger Fahrzeugluftreifen ist beispielsweise aus der EP 1 609 624 A1 bekannt. Der Laufstreifen dieses Fahrzeugluftreifens weist gemäß einer Variante einen zentralen Abschnitt und zwei Schulterabschnitte auf, wobei die Schulterabschnitte aus einer Gummimischung bestehen, die einen geringeren dynamischen Elastizitätsmodul E' (bei 60° C) aufweist als die Gummimischung des zentralen Abschnittes. Ferner weist die Gummimischung des zentralen Abschnittes eine größere Shore-A-Härte und einen größeren Speichermodul auf als jene der Schulterabschnitte. Durch diese Maßnahmen werden Vorteile im Hinblick auf den Nassgriff erzielt und gute Handlingeigenschaften bei Kurvenfahrt beibehalten.

Die vorangemeldete und nachveröffentlichte EP 2594 413 A1 zeigt einen ähnlichen Fahrzeugluftreifen, bei dem jedoch der Laufstreifenunterbau anders ausgeformt ist.

Ferner ist aus der JP 2008 024 045 A ein Fahrzeugluftreifen bekannt, dessen Laufstreifen eine als dünne Schicht innerhalb eines zentralen Laufstreifenabschnittes verlaufende Basisschicht aufweist, die gleichzeitig die Schulterabschnitte im Laufstreifen bildet. Die Basisschicht und daher auch die beiden seitlichen Schulterabschnitte bestehen aus einer Gummimischung mit einem geringeren dynamischen Elastizitätsmodul und einer höheren Rückprallelastizität als der zentrale Abschnitt des Laufstreifens, sodass die Gummimischung mit dem niedrigeren Rollwiderstand in den Schulterabschnitten des Laufstreifens vorgesehen ist.

Die DE 10 2008 018 345 A1 offenbart einen Fahrzeugluftreifen, insbesondere für Nutzfahrzeuge, mit einem Laufstreifen, welcher im bodenberührenden Bereich einen mittleren Abschnitt aus einer ersten Gummimischung und zwei Schulterabschnitte aus einer zweiten Gummimischung aufweist, wobei sich die beiden Gummimischungen in ihrer Rückprallelastizität bei Raumtemperatur unterscheiden. Die Gummimischung der Schulterabschnitte weist eine um mindestens 2% höhere Rückprallelastizität bei Raumtemperatur auf als die Gummimischung des mittleren Abschnittes.

Die DE 10 2008 018 340 A1 offenbart einen Fahrzeugluftreifen, insbesondere für Nutzfahrzeuge, mit einem Laufstreifen, welcher im bodenberührenden Bereich aus mindestens zwei Umfangsabschnitten besteht, die aus unterschiedlichen Kautschukmischungen (A, B) hergestellt sind. Das Polymersystem der einen Kautschukmischung (A) enthält SSBR eines bestimmten Typs, das Polymersystem der anderen Kautschukmischung (B) enthält SSBR eines anderen Typs, wobei der eine SSBR-Typ eine Glasübergangstemperatur Tg aufweist, die um bis zu 20 °C höher ist alsjene des anderen SSBR-Typs, wobei die beiden Polymersysteme ansonsten zumindest weitgehend übereinstimmende Komponenten in zumindest weitgehend übereinstimmenden Anteilen aufweisen.

Die EP 0 798 142 A1 offenbart einen Fahrzeugluftreifen, dessen Laufstreifen aus zumindest zwei verschiedenen Gummimischungen aufgebaut ist, wobei eine erste mit der Fahrbahn in Berührung kommende Gummimischung (Laufstreifencap) einen spezifischen elektrischen Widerstand von größer 10¹⁰ Ohm x cm aufweist, wobei diese Gummimischung zumindest die Hälfte der mit der Fahrbahn in Berührung kommenden Fläche des Laufstreifens einnimmt. Eine zweite Gummimischung (Laufstreifenbase) mit einem spezifischen elektrischen Widerstand kleiner 10⁸ Ohm x cm nimmt die übrige mit der Fahrbahn in Berührung kommende Fläche ein und nimmt unterhalb der ersten Gummimischung den gesamten Raum zwischen dieser und dem Gürtelpaket ein und steht weiterhin an ihren beiden axialen Begrenzungen zu den Seiten des Reifens mit zumindest einer weiteren Gummimischung mit einem spezifischen elektrischen Widerstand kleiner 10 exp 8 Ohm x cm in Kontakt, um eine ausreichende elektrische Leitfähigkeit zu erzielen.

Aus der US 4,385,653 A ist ein für Personenkraftwagen vorgesehener Fahrzeugluftreifen bekannt, dessen Laufstreifen einteilig ausgeführt ist und ebenfalls einen zentralen Abschnitt aus einer ersten Gummizusammensetzung und zwei Schulterabschnitte aus einer zweiten Gummizusammensetzung aufweist. Die eine Gummizusammensetzung soll einen geringen Hystereseverlust aufweisen und basiert beispielsweise auf Naturkautschuk, Isopren-Kautschuk und Butadien-Kautschuk. Die zweite, einen höheren Hystereseverlust aufweisende Gummizusammensetzung enthält als Kautschukkomponente beispielsweise ausschließlich Styrol-Butadien-Kautschuk. Die Gummizusammensetzung mit dem geringeren Hystereseverlust wird im zentralen Abschnitt des Laufstreifens eingesetzt und weist daher einen geringeren Rollwiderstand auf als die Gummimischung in den seitlichen Abschnitten, die einen besseren Nassgriff aufweist. Aus der AT 376 401 B ist ein Fahrzeugluftreifen bekannt, bei dem sich der Laufstreifen aus einer Laufstreifencap und einer Laufstreifenbase zusammensetzt, wobei die Laufstreifenbase im Querschnitt trogartig ausgebildet ist und die Laufstreifencap in die Laufstreifenbase eingesetzt ist. Die Laufstreifenbase erstreckt sich daher schulterseitig bis an die Oberfläche des Laufstreifens. Der Laufstreifenbase soll dadurch ein größerer Anteil am Volumen der Lauffläche zugeteilt werden, sodass sich die qualitativen Eigenschaften der Gummimischung der Laufstreifenbase auf den Laufstreifen quantitativ stärker auswirken können.

Der Rollwiderstand korreliert mit der Rückprallelastizität einer Gummimischung, wobei eine hohe Rückprallelastizität einen niedrigeren Rollwiderstand zur Folge hat. Die Handlingeigenschaften, insbesondere die Schräglaufsteifigkeit, variiert mit der dynamischen Steifigkeit einer Gummimischung, wobei ein relativ hoher Wert auch eine hohe Schräglaufsteifigkeit bedeutet. Verwendet man daher entsprechende Gummimischungen im mittleren Bereich des Laufstreifens und in den beiden Schulterbereichen, so lässt sich der Rollwiderstand bei passablen Handlingeigenschaften senken.

Der Erfindung liegt die Aufgabe zugrunde, einen Fahrzeugluftreifen der eingangs genannten Art derart zu verbessern, dass der Zielkonflikt zwischen einer Reduktion des Rollwiderstandes und guten Handlingeigenschaften, insbesondere hoher Schräglaufsteifigkeit, besser gelöst wird als bei den bekannten Fahrzeugluftreifen.

Gelöst wird die gestellte Aufgabe erfindungsgemäß dadurch, dass die Schulterabschnitte aus einer Gummimischung bestehen, deren Rückprallelastizität (bei 70°C, gemäß DIN 53512) zumindest der Rückprallelastizität der Gummimischung im zentralen Abschnitt entspricht.

Gemäß der Erfindung wird daher die steifere Gummimischung mit dem größeren dynamischen Elastizitätsmodul E' aus dem zentralen Abschnitt unterhalb der weicheren Mischungen in den Schulterabschnitten fortgeführt. Es wurde festgestellt, dass diese Maßnahme ein spezielles Deformationsverhalten des Reifens beim Abrollen zur Folge hat, welches speziell für die Handlingeigenschaften, insbesondere die Schräglaufsteifigkeit, sehr vorteilhaft ist, wobei ein geringer Rollwiderstand erhalten bleibt. Darüber hinaus ermöglichen es die steiferen Ausläufer, die Gummimischung in den Schulterabschnitten besonders rollwiderstandsarm auszulegen. Unter Laufstreifenunterbau wird übrigens der oder unmittelbar radial innerhalb des Laufstreifens anschließende Bauteil, wie beispielsweise eine Unterplatte oder bei einer Ausführung des Laufstreifens aus Cap und Base die Laufstreifenbase, verstanden.

Die beiden Ausläufer des zentralen Abschnittes ermöglichen eine besonders rollwiderstandsarme Auslegung der Gummimischung der Schulterabschnitte. Die Schulterabschnitte können daher aus einer Gummimischung bestehen, deren Rückprallelastizität zumindest der Rückprallelastizität der Gummimischung im zentralen Abschnitt entspricht.

Gemäß einer bevorzugten Ausführungsform der Erfindung weisen die Ausläufer eine zumindest im Wesentlichen konstante Dicke zwischen 1,0 mm und 2,0 mm auf. Mit Ausläufern einer Dicke in diesem Bereich lässt sich der Zielkonflikt zwischen niedrigem Rollwiderstand und hoher Schräglaufsteifigkeit besonders gut lösen.

Die Erfindung ist grundsätzlich bei Laufstreifen mit beliebigen Profilierungen und beliebigem Aufbau, sei es einteilig oder zweiteilig, aus Laufstreifencap und Laufstreifenbase, anwendbar. Es ist jedoch von Vorteil, wenn die Profilierung eine Art Funktionstrennung zwischen den Schulterabschnitten und dem zentralen Abschnitt gestattet. Dies ist beispielsweise bei Laufstreifen möglich, bei denen zwischen den Schulterabschnitten und dem zentralen Abschnitt jeweils eine Umfangsrille angeordnet ist, welche vorzugsweise zumindest im Wesentlichen gerade und in Umfangsrichtung verläuft. Bei einer derartigen Ausführung des Laufstreifens können die Ausläufer zwischen dem Rillengrund der Umfangsrillen und den Schulterbereichen des Reifens verlaufen.

Bei der bereits erwähnten Ausführung des Laufstreifens aus einer Laufstreifenbase und einer Laufstreifencap bilden die Schulterabschnitte gemeinsam mit dem zentralen Abschnitt und den beiden Ausläufern die Laufstreifencap.

Um besonders ausgewogene und gute Ergebnisse hinsichtlich niedrigem Rollwiderstand und besserer Schräglaufsteifigkeit zu erhalten, ist es von Vorteil, wenn der zentrale Abschnitt, je nach Reifenbreite, eine Breite zwischen 30 % und 70 % der Bodenaufstandsflächenbreite aufweist. Bei breiteren Reifen wird der zentrale Abschnitt verhältnismäßig breiter als bei schmäleren Reifen ausgeführt, die Breite der beiden Schulterabschnitte ist in hingegen weitgehend unabhängig von der Reifenbreite und bei breiteren und schmäleren Reifen vorzugsweise etwa gleich groß.

Die Schulterabschnitte können übereinstimmende Breiten aufweisen. Bei sogenannten asymmetrisch ausgeführten Laufstreifenprofilen kann es hingegen von Vorteil sein, wenn die Breiten der beiden Schulterabschnitte sich voneinander um insbesondere bis zu 50 % unterscheiden.

Insbesondere ist es vorteilhaft, wenn die Rückprallelastizität der Gummimischung in den Schulterabschnitten größer ist als die Rückprallelastizität der Gummimischung im zentralen Abschnitt.

Um den zwischen geringem Rollwiderstand und guter Schräglaufsteifigkeit bestehenden Zielkonflikt besonders gut zu lösen, ohne andere Laufstreifeneigenschaften, wie beispielsweise die Abriebsbeständigkeit und dergleichen, negativ zu beeinflussen, ist es vorteilhaft, die Gummimischungen für den zentralen Abschnitt und die beiden Schulterabschnitte hinsichtlich des dynamischen Elastizitätsmodul E' der Mischungen und deren Rückprallelastizität entsprechend auszulegen.

In diesem Zusammenhang ist es daher vorteilhaft, wenn der dynamische Elastizitätsmodul E' der Gummimischung der beiden Schulterabschnitte zwischen 30 % und 90 %, insbesondere zwischen 40 % und 80 %, des dynamischen Elastizitätsmoduls E' der Gummimischung des zentralen Abschnittes des Laufstreifens beträgt.

Insbesondere sollte der dynamische Elastizitätsmodul E' der Gummimischung der Schulterabschnitte zwischen 2,0 N/mm² und 6,4 N/mm², insbesondere zwischen 3,0 N/mm² und 5,7 N/mm², betragen. Der dynamische Elastizitätsmodul E' der Gummimischung des zentralen Abschnitts sollte zwischen 3,9 N/mm² und 8,1 N/mm², insbesondere zwischen Laufstreifenbase 8 und über die komplette Breite der Schulterabschnitte 11 verlaufen und eine zumindest im Wesentlichen konstante Dicke aufweisen, welche in der Größenordnung von 1,0 mm bis 2,0 mm beträgt. Ein an die Rillenflanken 9b anschließender Abschnitt des Rillengrundes 9c kann die Schulterabschnitte 11 mitbegrenzen. Bei anders ausgeführter Laufstreifenprofilierung verlaufen die Grenzen zwischen den Schulterabschnitten 11 und dem zentralen Abschnitt 10 nicht durch/bei Umfangsrillen, sondern beispielsweise durch bzw. in Profilbändern.

Der zentrale Abschnitt 10 der Laufstreifencap 7 erstreckt sich mit konstanter bzw. weitgehend konstanter axialer Breite und vorzugsweise symmetrisch zur Reifenmitte, über eine Breite B_{z} von 30 % bis 70 % der Breite B_{A} des Laufstreifens 1 in der Bodenaufstandsfläche, welche bei auf einer Felge montierten und unter Nenndruck und Nennlast gesetzten Reifen (gemäß E.T.R.T.O.-Standard) ermittelt wird. Bei breiteren Reifen ist der zentrale Abschnitt verhältnismäßig breiter, bei schmäleren Reifen verhältnismäßig geringer. Die Breite der beiden Schulterabschnitte 11 kann übereinstimmen, die Schulterabschnitte 11 können jedoch auch unterschiedliche Breiten - bei sogenannten asymmetrisch ausgeführten Laufstreifenprofilen, bei welchen die Umfangsrillen 9 nicht symmetrisch zur Reifenmitte verlaufen - aufweisen. In jedem Fall beträgt die Mindestbreite der Schulterabschnitte 10 % der Bodenaufstandsflächenbreite B_{A}.

Die beiden Schulterabschnitte 11 der Laufstreifencap 7 bestehen aus einer Gummimischung, deren Rückprallelastizität bei 70° Celsius gemäß DIN 35512 zumindest der Rückprallelastizität der Gummimischung des zentralen Abschnittes 10 und der beiden Ausläufer 12 entspricht, vorzugsweise größer ist. Die Gummimischung der Schulterabschnitte 11 weist ferner einen geringeren dynamischen Elastizitätsmodul E' bei 55° Celsius gemäß DIN 53513 (bei 8 % Dehnung) auf als die Gummimischung des zentralen Abschnittes 10 und dessen Ausläufer 12. Besonders vorteilhaft ist es, wenn die Gummimischung in den Schulterabschnitten 11 einen Elastizitätsmodul E' bei 55° Celsius aufweist, welcher 2,0 N/mm² bis 6,4 N/mm², insbesondere 3,0 N/mm² bis 5,7 N/mm², beträgt. Die Gummimischung im zentralen Abschnitt 10 weist einen Elastizitätsmodul E' auf, welcher 3,9 N/mm² bis 8,1 N/mm², insbesondere 5,2 N/mm² bis 7,7 N/mm², beträgt. Die Rückprallelastizität der Gummimischung in den Schulterabschnitten 11 bei 70° Celsius beträgt 40 % bis 90 %, insbesondere 50 % bis 80 %, die Rückprallelastizität der Gummimischung des zentralen Abschnittes 10 und dessen Ausläufer 12 beträgt 15 % bis 70 %, insbesondere 20 % bis 60 %.

Beispiele für typische Kautschukmischungen für den zentralen Abschnitt 10 und die beiden Ausläufer 12 sowie für die Schulterabschnitte 11 der Laufstreifencap 7 sind Tabelle 1 zu entnehmen. Die Anteile der Mischungsbestandteile sind in phr angegeben. Der SSBR 1 ist ein Kautschuk mit einer Glasübergangstemperatur Tg zwischen -25° C und -30° C, der SSBR 2 ist ein Kautschuk mit einer Glasübergangstemperatur Tg zwischen - 17° C und -24° C. Die Mischung M₁ ist ein Beispiel für eine Mischung für den zentralen Abschnitt 10 und die Ausläufer 12 und die Mischung M₂ ist ein Beispiel für eine Mischung für die Schulterabschnitte 11.

**Tabelle 1**

| Bestandteile | M₁ | M₂ |
|---|---|---|
| NR | 15 | 15 |
| SSBR 1 | 85 | |
| SSBR 2 | | 85 |
| Ruß | 14 | 14 |
| Kieselsäure | 96 | 40 |
| Silan | 8 | 3 |
| Klebharz | 14 | 7 |
| DPG Beschleuniger | 2 | 1,5 |
| CBS Beschleuniger | 2 | 2 |
| Schwefel | 1,7 | 1,7 |

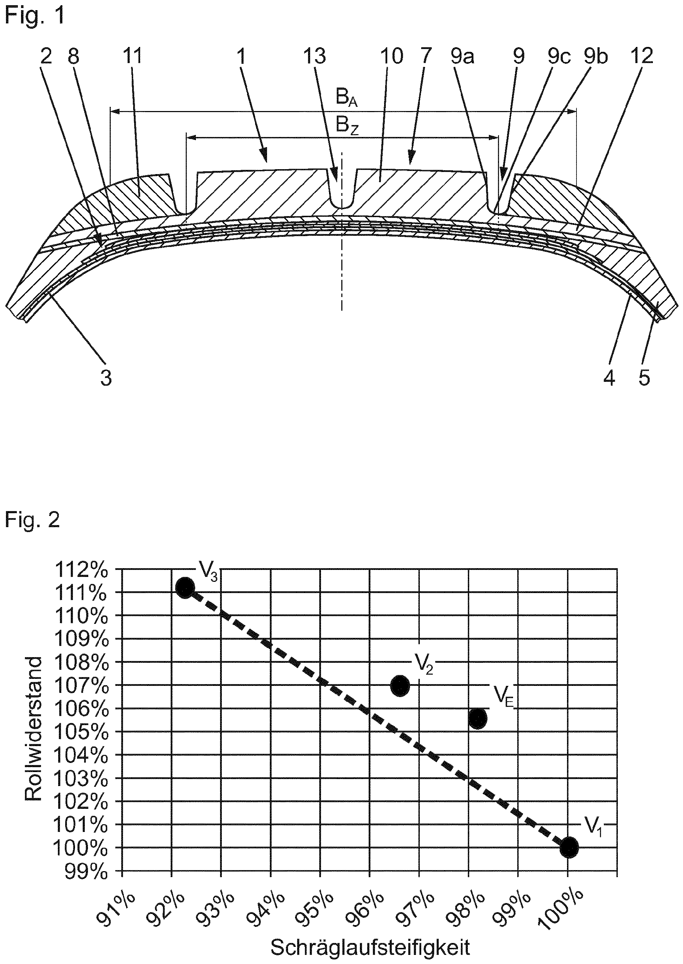

Mit PKW-Reifen der Dimension 205/55 R 16 mit unterschiedlichem Aufbau des Laufstreifens wurde ein Versuchsprogramm durchgeführt und der Rollwiderstand und die Schräglaufsteifigkeit ermittelt. Der Rollwiderstand der Reifen wurde gemäß ISO 28580, die Schräglaufsteifigkeit gemäß TIME (Messmethode siehe VDI-Berichte, Issue Number:1494, Publisher: VDI Verlag GmbH, ISSN: 0083-5560) ermittelt. In der nachstehenden Tabelle 2 sind die vier verwendeten Laufstreifenvarianten der getesteten Reifen und die Messergebnisse enthalten. Das Diagramm in Fig. 2 gibt die gemessenen Werte für den Rollwiderstand und die Schräglaufsteifigkeit graphisch wieder. Die Reifen der Variante V₁ besaßen einen Laufstreifen mit einer einheitlichen Laufstreifencap aus einer einzigen Mischung, der Mischung M₁, die Reifen der Variante V₃ einen Laufstreifen mit einer einheitlichen Laufstreifencap aus der Mischung M₂. Die mit Reifen der Variante V₁ ermittelten Werte für Rollwiderstand und Schräglaufsteifigkeit wurden 100 % gesetzt. Die Reifen der Variante V_{E} wiesen eine gemäß der gegenständlichen Erfindung ausgeführte Laufstreifencap auf, die Reifen der Variante V₃ eine Laufstreifencap aus einem zentralen Abschnitt und zwei Schulterabschnitten, jedoch ohne Ausläufer des zentralen Abschnittes. Im Diagramm in Fig. 2 ist zwischen den Messergebnissen der Varianten V₁ und V₃ eine Gerade in Form einer gestrichelten Linie gezogen, die beiden Messpunkte der Varianten V_{E} und V₂ oberhalb der gestrichelten Linie zeigen daher beide eine Verbesserung, wobei der Messpunkt der Variante V_{E} einen größeren Abstand zur gestrichelten Linie aufweist als der Messpunkt der Variante V₂. Reifen der Variante V_{E}, demnach erfindungsgemäß ausgeführte Reifen, erreichen daher das gesetzte Ziel, den Zielkonflikt zwischen dem Rollwiderstand und der guten Schräglaufsteifigkeit besonders gut zu lösen, am besten.

**Tabelle 2**

| Variante | V₁ | V_{E} | V₂ | V₃ |
|---|---|---|---|---|
| Zentraler Abschnitt ohne Ausläufer | M₁ | - | M₁ | M₂ |
| Zentraler Abschnitt mit Ausläufern | - | M₁ | - | - |
| Schulterabschnitte | M₁ | M₂ | M₂ | M₂ |
| Anteil an M₁ | 100 % | 69 % | 49 % | 0 % |
| Rollwiderstand | 100,0 % | 105,6 % | 107,0 % | 111,2 % |
| Schräglaufsteifigkeit | 100,0 % | 98,2 % | 96,6 % | 92,3 % |

### Bezugsziffern

- 1: Laufstreifen
- 2: Gürtel
- 3: Radialkarkasse
- 4: Innenschicht
- 5: Seitenwand
- 7: Laufstreifencap
- 8: Laufstreifenbase
- 9: Umfangsrille
- 9a: Rillenflanke
- 9b: Rillenflanke
- 9c: Rillengrund
- 10: zentraler Abschnitt
- 11: Schulterabschnitt
- 12: Ausläufer
- 13: Umfangsrille

## Patentansprüche

1. Fahrzeugluftreifen für Personenkraftwagen, Vans oder dergleichen mit einer Radialkarkasse (3), einem mehrlagigen Gürtel (2) und einem profilierten Laufstreifen (1), welcher, in axialer Richtung betrachtet, einen zentralen Abschnitt (10) und zwei Schulterabschnitte (11) aufweist, wobei die Schulterabschnitte (11) aus einer Gummimischung bestehen, die einen geringeren dynamischen Elastizitätsmodul E' bei 55° C und 8 % Dehnung, gemäß DIN 53513, aufweist als die Gummimischung, aus welcher der zentrale Abschnitt (10) besteht, und wobei der zentrale Abschnitt (10) an seiner Basis seitlich im Wesentlichen parallel zum Laufstreifenunterbau und radial innerhalb sowie über die Breite der Schulterabschnitte (11) verlaufende Ausläufer (12) aufweist,
**dadurch gekennzeichnet,**
**dass** die Schulterabschnitte (11) aus einer Gummimischung bestehen, deren Rückprallelastizität bei 70° C, gemäß DIN 53512, zumindest der Rückprallelastizität der Gummimischung im zentralen Abschnitt (10) entspricht.

2. Fahrzeugluftreifen nach Anspruch 1, **dadurch gekennzeichnet, dass** die Ausläufer (12) eine im Wesentlichen konstante Dicke von 1,0 mm bis 2,0 mm aufweisen.

3. Fahrzeugluftreifen nach Anspruch 1, **dadurch gekennzeichnet, dass** zwischen den Schulterabschnitten (11) und dem zentralen Abschnitt (10) jeweils eine Umfangsrille (9) angeordnet ist, welche zumindest im Wesentlichen gerade und in Umfangsrichtung verläuft.

4. Fahrzeugluftreifen nach Anspruch 3, **dadurch gekennzeichnet, dass** die Ausläufer (12) vom Rillengrund (9c) der Umfangsrillen (9) bis in die Schulterbereiche des Reifens verlaufen.

5. Fahrzeugluftreifen nach einem der Ansprüche 1 bis 4, **dadurch gekennzeichnet, dass** der Laufstreifen (1) aus einer Laufstreifenbase (8) und einer Laufstreifencap (7) besteht, wobei die Schulterabschnitte (11) gemeinsam mit dem zentralen Abschnitt (10) und den Ausläufern (12) die Laufstreifencap (7) bilden.

6. Fahrzeugluftreifen nach einem der Ansprüche 1 bis 5, **dadurch gekennzeichnet, dass** die Breite des zentralen Abschnittes (10) zwischen 30 % und 70 % der Bodenaufstandsflächenbreite des Laufstreifens beträgt.

7. Fahrzeugluftreifen nach einem der Ansprüche 1 bis 5, **dadurch gekennzeichnet, dass** sich die Breiten der beiden seitlichen Abschnitte (11) um bis zu 50 % voneinander unterscheiden.

8. Fahrzeugluftreifen nach einem der Ansprüche 1 bis 5, **dadurch gekennzeichnet, dass** die Breiten der beiden seitlichen Abschnitte (11) zumindest im Wesentlichen übereinstimmen.

9. Fahrzeugluftreifen nach einem der Ansprüche 1 bis 8, **dadurch gekennzeichnet, dass** der dynamische Elastizitätsmodul E' bei 55° C und 8 % Dehnung, gemäß DIN 53513, der Gummimischung der Schulterabschnitte (11) zwischen 30 % und 90 %, insbesondere zwischen 40 % und 80 %, des dynamischen Elastizitätsmoduls E' bei 55° C und 8 % Dehnung, gemäß DIN 53513, der Gummimischung des zentralen Abschnittes (10) des Laufstreifens (1) beträgt.

10. Fahrzeugluftreifen nach einem der Ansprüche 1 bis 9, **dadurch gekennzeichnet, dass** der dynamische Elastizitätsmodul E' bei 55° C und 8 % Dehnung, gemäß DIN 53513, der Gummimischung der Schulterabschnitte (11) zwischen 2,0 N/mm² und 6,4 N/mm², insbesondere zwischen 3,0 N/mm² und 5,7 N/mm², beträgt.

11. Fahrzeugluftreifen nach einem der Ansprüche 1 bis 9, **dadurch gekennzeichnet, dass** der dynamische Elastizitätsmodul E bei 55° C und 8 % Dehnung, gemäß DIN 53513, der Gummimischung des zentralen Abschnittes (10) zwischen 3,9 N/mm² und 8,1 N/mm², insbesondere zwischen 5,2 N/mm² und 7,7 N/mm², beträgt.

12. Fahrzeugluftreifen nach einem der Ansprüche 1 bis 11, **dadurch gekennzeichnet, dass** die Gummimischung des zentralen Abschnittes (10) eine Rückprallelastizität bei 70° C, gemäß DIN 53512, aufweist, welche zwischen 10 % und 80 % kleiner ist als die Rückprallelastizität bei 70° C, gemäß DIN 53512, der Schulterabschnitte (11).

13. Fahrzeugluftreifen nach einem der Ansprüche 1 bis 12, **dadurch gekennzeichnet, dass** die Rückprallelastizität bei 70° C, gemäß DIN 53512, der Gummimischung der beiden Schulterabschnitte (11) zwischen 40 % und 90 %, insbesondere zwischen 50 % und 80 %, beträgt.

14. Fahrzeugluftreifen nach einem der Ansprüche 1 bis 12, **dadurch gekennzeichnet, dass** die Gummimischung des zentralen Abschnittes (10) eine Rückprallelastizität bei 70° C, gemäß DIN 53512, aufweist, welche zwischen 15 % und 70 %, insbesondere zwischen 20 % und 60 %, beträgt.

## Claims

1. Pneumatic vehicle tyre for passenger cars, vans or the like, having a radial carcass (3), a multi-ply belt (2) and a profiled tread (1) which, when viewed in the axial direction, has a central portion (10) and two shoulder portions (11), the shoulder portions (11) consisting of a rubber compound that has a lower dynamic modulus of elasticity E' at 55°C and 8% elongation according to DIN 53513 than the rubber compound of which the central portion (10) consists, and the central portion (10) having extensions (12) at the base thereof, running laterally substantially parallel to the tread substructure and radially within and also over the width of the shoulder portions (11),
**characterized**
**in that** the shoulder portions (11) consist of a rubber compound of which the rebound resilience at 70° C, according to DIN 53512, corresponds at least to the rebound resilience of the rubber compound in the central portion (10).

2. Pneumatic vehicle tyre according to Claim 1, **characterized in that** the extensions (12) have a substantially constant thickness of 1.0 mm to 2.0 mm.

3. Pneumatic vehicle tyre according to Claim 1, **characterized in that** a circumferential groove (9) which runs at least substantially rectilinearly and in the circumferential direction is respectively arranged between the shoulder portions (11) and the central portion (10).

4. Pneumatic vehicle tyre according to Claim 3, **characterized in that** the extensions (12) run from the groove base (9c) of the circumferential grooves (9) into the shoulder regions of the tyre.

5. Pneumatic vehicle tyre according to one of Claims 1 to 4, **characterized in that** the tread (1) is composed of a tread base (8) and a tread cap (7), the shoulder portions (11) together with the central portion (10) and the extensions (12) forming the tread cap (7).

6. Pneumatic vehicle tyre according to one of Claims 1 to 5, **characterized in that** the width of the central portion (10) is between 30% and 70% of the width of the ground contact area of the tread.

7. Pneumatic vehicle tyre according to one of Claims 1 to 5, **characterized in that** the widths of the two lateral portions (11) differ from one another by up to 50%.

8. Pneumatic vehicle tyre according to one of Claims 1 to 5, **characterized in that** the widths of the two lateral portions (11) at least substantially coincide.

9. Pneumatic vehicle tyre according to one of Claims 1 to 8, **characterized in that** the dynamic modulus of elasticity E' at 55° C and 8% elongation, according to DIN 53513, of the rubber compound of the shoulder portions (11) is between 30% and 90%, in particular between 40% and 80%, of the dynamic modulus of elasticity E' at 55° C and 8% elongation, according to DIN 53513, of the rubber compound of the central portion (10) of the tread (1).

10. Pneumatic vehicle tyre according to one of Claims 1 to 9, **characterized in that** the dynamic modulus of elasticity E' at 55° C and 8% elongation, according to DIN 53513, of the rubber compound of the shoulder portions (11) is between 2.0 N/mm² and 6.4 N/mm², in particular between 3.0 N/mm² and 5.7 N/mm².

11. Pneumatic vehicle tyre according to one of Claims 1 to 9, **characterized in that** the dynamic modulus of elasticity E' at 55° C and 8% elongation, according to DIN 53513, of the rubber compound of the central portion (10) is between 3.9 N/mm² and 8.1 N/mm², in particular between 5.2 N/mm² and 7.7 N/mm².

12. Pneumatic vehicle tyre according to one of Claims 1 to 12, **characterized in that** the rubber compound of the central portion (10) has a rebound resilience at 70° C, according to DIN 53512, which is between 10% and 80% lower than the rebound resilience at 70° C, according to DIN 53512, of the shoulder portions (11) .

13. Pneumatic vehicle tyre according to one of Claims 1 to 11, **characterized in that** the rebound resilience at 70° C, according to DIN 53512, of the rubber compound of the two shoulder portions (11) is between 40% and 90%, in particular between 50% and 80%.

14. Pneumatic vehicle tyre according to one of Claims 1 to 12, **characterized in that** the rubber compound of the central portion (10) has a rebound resilience at 70°C, according to DIN 53512, which is between 15% and 70%, in particular between 20% and 60%.

## Revendications

1. Pneumatique de véhicule pour voitures particulières, fourgonnettes ou similaires, comprenant une carcasse radiale (3), une ceinture multicouche (2) et une bande de roulement profilée (1), laquelle comprend, considérée dans la direction axiale, une partie centrale (10) et deux parties d'épaulement (11), les parties d'épaulement (11) étant constituées d'un mélange de caoutchouc qui présente un module d'élasticité dynamique E' à 55° C et 8 % d'allongement, selon DIN 53513, inférieur à celui du mélange de caoutchouc dont la partie centrale (10) est constituée, et la partie centrale (10) comprenant, au niveau de sa base, des prolongements (12) s'étendant latéralement sensiblement parallèlement à la base de bande de roulement et radialement à l'intérieur ainsi que sur la largeur des parties d'épaulement (11),
**caractérisé en ce que**
les parties d'épaulement (11) sont constituées d'un mélange de caoutchouc dont l'élasticité de rebondissement à 70° C, selon DIN 53512, correspond au moins à l'élasticité de rebondissement du mélange de caoutchouc dans la partie centrale (10).

2. Pneumatique de véhicule selon la revendication 1, **caractérisé en ce que** les prolongements (12) présentent une épaisseur sensiblement constante de 1,0 mm à 2,0 mm.

3. Pneumatique de véhicule selon la revendication 1, **caractérisé en ce qu'**entre les parties d'épaulement (11) et la partie centrale (10) est disposée respectivement une rainure périphérique (9), laquelle s'étend de manière au moins sensiblement rectiligne et dans la direction périphérique.

4. Pneumatique de véhicule selon la revendication 3, **caractérisé en ce que** les prolongements (12) s'étendent à partir du fond (9c) des rainures périphériques (9) jusque dans les régions d'épaulement du pneumatique.

5. Pneumatique de véhicule selon l'une des revendications 1 à 4, **caractérisé en ce que** la bande de roulement (1) est constituée d'une base de bande de roulement (8) et d'un recouvrement de bande de roulement (7), les parties d'épaulement (11) formant le recouvrement de bande de roulement (7) conjointement avec la partie centrale (10) et les prolongements (12).

6. Pneumatique de véhicule selon l'une des revendications 1 à 5, **caractérisé en ce que** la largeur de la partie centrale (10) est comprise entre 30 % et 70 % de la largeur de la surface de contact au sol de la bande de roulement.

7. Pneumatique de véhicule selon l'une des revendications 1 à 5, **caractérisé en ce que** les largeurs des deux parties latérales (11) sont différentes l'une de l'autre de jusqu'à 50 %.

8. Pneumatique de véhicule selon l'une des revendications 1 à 5, **caractérisé en ce que** les largeurs des deux parties latérales (11) coïncident au moins sensiblement.

9. Pneumatique de véhicule selon l'une des revendications 1 à 8, **caractérisé en ce que** le module d'élasticité dynamique E' à 55° C et 8 % d'allongement, selon DIN 53513, du mélange de caoutchouc des parties d'épaulement (11) est compris entre 30 % et 90 %, en particulier entre 40 % et 80 %, du module d'élasticité dynamique E' à 55° C et 8 % d'allongement, selon DIN 53513, du mélange de caoutchouc de la partie centrale (10) de la bande de roulement (1).

10. Pneumatique de véhicule selon l'une des revendications 1 à 9, **caractérisé en ce que** le module d'élasticité dynamique E' à 55° C et 8 % d'allongement, selon DIN 53513, du mélange de caoutchouc des parties d'épaulement (11) est compris entre 2,0 N/mm² et 6,4 N/mm², en particulier entre 3,0 N/mm² et 5,7 N/mm².

11. Pneumatique de véhicule selon l'une des revendications 1 à 9, **caractérisé en ce que** le module d'élasticité dynamique E à 55° C et 8 % d'allongement, selon DIN 53513, du mélange de caoutchouc de la partie centrale (10) est compris entre 3,9 N/mm² et 8,1 N/mm², en particulier entre 5,2 N/mm² et 7,7 N/mm².

12. Pneumatique de véhicule selon l'une des revendications 1 à 11, **caractérisé en ce que** le mélange de caoutchouc de la partie centrale (10) présente une élasticité de rebondissement à 70° C, selon DIN 53512, laquelle est inférieure de 10 % à 80 % à l'élasticité de rebondissement à 70° C, selon DIN 53512, des parties d'épaulement (11).

13. Pneumatique de véhicule selon l'une des revendications 1 à 12, **caractérisé en ce que** l'élasticité de rebondissement à 70° C, selon DIN 53512, du mélange de caoutchouc des deux parties d'épaulement (11) est comprise entre 40 % et 90 %, en particulier entre 50 % et 80 %.

14. Pneumatique de véhicule selon l'une des revendications 1 à 12, **caractérisé en ce que** le mélange de caoutchouc de la partie centrale (10) présente une élasticité de rebondissement à 70° C, selon DIN 53512, laquelle est comprise entre 15 % et 70 %, en particulier entre 20 % et 60 %.
